# EUROPÄISCHE PATENTANMELDUNG

(11) **EP 0 832 733 A2**
(43) Veröffentlichungstag der Anmeldung: **01.04.1998**
(21) Anmeldenummer: 97116525.3
(22) Anmeldetag: 23.09.1997
(51) Int. Cl.: B29D 30/54, B29D 30/56

(54) **Vorrichtung für die Kaltvulkanisation von runderneuerten Reifen**

(30) Priorität: 25.09.1996 DE 29616696 U
(71) Anmelder: Gummiwerk Kraiburg Austria Ges.m.b.H & Co., 5132 Geretsberg (AT)
(72) Erfinder: Immler, Otto, 88356 Ostrach (DE)
(74) Vertreter: Vinazzer, Edith, Dipl.-Ing.

(57) **Zusammenfassung**

Die Erfindung betrifft eine Vorrichtung für die Kaltvulkanisation von runderneuerten Reifen bestehend aus einer den Reifen aufnehmenden Kombination aus Innen- und Außenhülle (4, 5) zum Erzeugen von Vakuum zwischen Reifen und Hüllen, wobei die Außenhülle (4) im Bereich von Schließkanten (7) die Innenhülle (5) überdeckt.

Die Innenhülle (5) ist zumindest einseitig über die Schließkante (7) hinaus, insbesondere bis zum Protektor (2) des Reifens reichend, verlängert.

## Beschreibung

Die Erfindung betrifft eine Vorrichtung für die Kaltvulkanisation von runderneuerten Reifen bestehend aus einer den Reifen aufnehmenden Kombination aus Innen-und Außenhülle zum Erzeugen von Vakuum zwischen Reifen und Hüllen, wobei die Außenhülle im Bereich von Schließkanten die Innenhülle überdeckt.

Zum Runderneuern durch Kaltvulkanisation wird auf den wieder verwendeten Reifengrundkörper ein neuer Protektor, dies ist ein bereits profilierter und vulkanisierter Laufstreifen, aufgelegt und aufvulkanisiert. Der Protektor muß mit dem Reifengrundkörper eine feste, unlösbare Verbindung eingehen. Zur Herstellung der Verbindung zwischen Reifengrundkörper und Protektor wird eine bindende, unvulkanisierte Kautschukmischung verwendet und der Reifen nach dem Aufbringen des Protektors auf dem Reifen in eine Hülle, auch Envelope genannt, eingebracht. Der Raum zwischen dem Reifen und der Hülle wird dann evakuiert, sodaß die Hülle gegen den mit dem Protektor versehenen Reifengrundkörper gepreßt wird.

Nachdem der Reifen mit der Hülle ca. 3 Minuten mittels einer Vakuumpumpe auf Dichtheit überprüft wurde, gibt man den Reifen in seiner Hülle in einen Autoklaven, der auf 95 bis 125° aufgeheizt und mit einem Druck von 5 bis 8 bar betrieben wird. Hierbei wird das Vakuum aufrecht erhalten bis der Kessel 1 bar Überdruck überschritten hat.

Es ist bekannt, daß sich während eines Vulkanisationsprozesses der plastische Kautschuk in elastischen Gummi infolge einer chemischen Reaktion (Molekularkettenverknüpfung) bei bestimmten Temperaturen und unter Einwirkung von Druck umwandelt.

Im Rahmen der Runderneuerung von Reifen werden plastische Materialien, also geeignete Kautschukmischungen, jedoch nicht nur zur Herstellung einer Verbindung zwischen dem Reifengrundkörper und dem Protektor eingesetzt, sondern auch zur Erneuerung von beschädigten Seitenwänden. Dabei können die erwähnte bindende Kautschukmischung oder auch entsprechende Streifen aus anderen Mischungen verwendet werden.
Die bekannten, Innen- und Außenhüllen verwendenden Verfahren sind jedoch nicht in jedem Fall in der Lage, eine homogene Fläche an der belegten Seitenwand herzustellen.

Bekannte Innenhüllen enden in etwa in der Mitte der Seitenwand des Reifens. Während des Vulkanisationsprozesses gerät nun der plastische Rohkautschuk in eine "Fließphase", in welcher der Kautschuk infolge des Vakuums das Bestreben hat, sich zwischen die Schließkanten der Innenhülle und der Anlagefläche der Außenhülle auf den Schließkanten zu schieben.

Hierbei können undichte Stellen während des Vulkansiationsprozesses auftreten. Wenn das Vakuum in der Hülle über den Vulkanisationszeitraum infolge einer undichten Stelle im Bereich der Schließkante nicht aufrecht erhalten werden kann, resultiert dies in der Regel in Verschiebungen der Profilblöcke und Profilrillen und/oder in einer mangelhaften Covulkanisation des Laufstreifens am Reifengrundkörper. Derartige Reifen können oft dem vorgesehenen Gebrauch nicht zugeführt werden. Des weiteren sind die dadurch auftretenden Kantenbildungen nach der Vulkanisation zu verschliefen.

Der Erfindung liegt die Aufgabe zugrunde, eine zuverlässig arbeitende Vorrichtung für die Kaltvulkanisation von runderneuerten Reifen zu schaffen, mit der insbesondere die teilweise oder ganzflächige Erneuerung der Seitenwand problemlos möglich ist und die eine lange Lebensdauer und eine einfache Handhabung aufweist.

Diese Aufgabe wird erfindungsgemäß dadurch gelöst, daß die Innenhülle zumindest einseitig über die Schließkante hinaus, insbesondere bis zum Protektor des Reifens reichend, verlängert ist.

Da die Schließkante nun nicht mehr mit unvulkanisiertem Material, sei es von der Bindeschicht oder der Kautschukmischung von Seitenwandstreifen her, in Berührung kommen kann, wird die Dichtheit des Systems Innen-Außenhülle somit über den gesamten Vulkanisationsprozess aufrecht erhalten. Durch den "Fließprozess" auftretende undichte Stellen sind bei einer normalen Handhabung der Innenhülle nicht mehr zu erwarten. Dadurch lassen sich auch glatte Seitenwände erzielen, die keiner Nachbehandlung durch Abschleifen oder dgl. benötigen.

Die geeignetste Lage der Schließkante ist in der Flankenmitte zu sehen, es kann die Schließkante jedoch auch versetzt werden.

Dabei ist es günstig, wenn die Innenhülle soweit verlängert wird, daß sie den Protektor zumindest zum Teil seitlich überdeckt.

Um ein vorzeitiges Ansaugen der Außenhülle oberhalb der Schließkante zu vermeiden, ist eine im Bereich des Absaugventiles angeordnete Entlüftungshilfe vorgesehen.

Dabei wird diese Entlüftungshilfe insbesondere aus einem Entlüftungsgewebestreifen ausgeführt.

Der Entlüftungsgewebestreifen wird in radialer Anordnung zur Laufrichtung des Reifens über die Wulstbereiche verlaufend angebracht.

Der Entlüftungsgewebestreifen läßt sich dann einfach und effektiv anbringen, wenn die Innenhülle zumindest einseitig außerhalb der Schließkante mit einer entsprechenden Öffnung, Aussparung od. dgl. versehen wird.

Um Faltenbildung auszuschließen, sollen ferner die Innen- sowie die Außenhülle glatt am Reifen anliegen. Eine Überprüfung der Dichtheit erfolgt übrigens durch die bekannte Vakuummethode.

Die Erfindung wird nun nachstehend anhand der Zeichnungsfiguren, die schematische Darstellungen von Ausführungsbeispielen sind, näher erläutert.

Es zeigen:

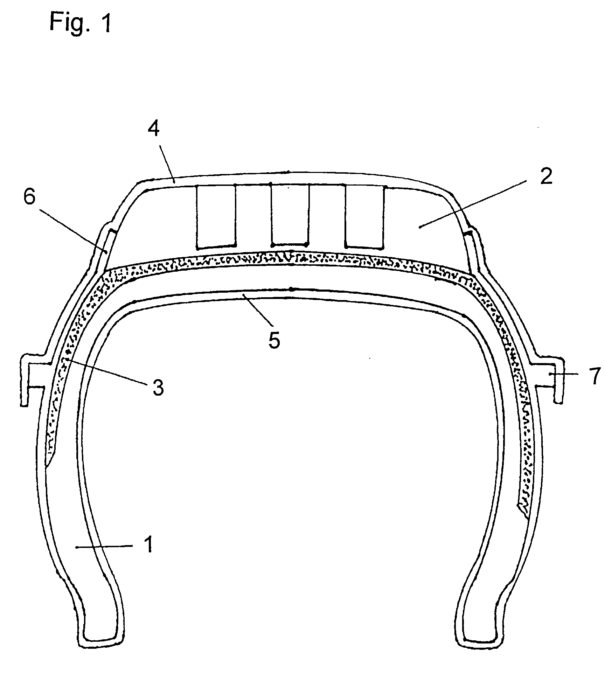

Fig. 1 eine Schnittzeichnung durch einen bereits mit einem Protektor versehenen und an den Seitenwänden zu erneuernden Reifen, welcher in eine Kombination aus Innen- und Außenhülle eingebracht ist, und
Fig. 2 eine Seitenansicht, teilweise aufgeschnitten, des mit einem Protektor belegten und mit einer Innenhülle versehenen Reifens.

Der zur Runderneuerung vorbereitete Reifen umfaßt einen Grundkörper 1, der sich in bekannter Weise aus verschiedenen, hier nicht dargestellten Reifenbauteilen, wie beispielsweise einer Innenplatte aus Gummi, Wulstkernen, zumindest einer mit insbesondere radial verlaufenden Festigkeitsträgern versehenen Karkasslage, ebenfalls Festigkeitsträger aufweisenden Gürtellagen etc. zusammensetzt. Auf den Grundkörper 1 ist der üblicherweise als Protektor 2 bezeichnete, bereits vulkanisierte und somit mit dem gewünschten Profil versehene, aus Gummi bestehende Laufstreifen aufgebracht.

Zwischen dem Protektor 2 und dem Grundkörper 1 sowie auch im Bereich der Seitenwände, die dort entsprechend angerauht werden, wird eine Schicht 3 von vorerst unvulkanisiertem Material, aus einer oder mehreren geeigneten Kautschukmischungen, aufgebracht. Anstelle einer einheitlichen Schicht 3, die auch für die Erneuerung der Seitenwände verwendet wird, können auch gesonderte, aus einer anderen Mischung bestehende Seitenwandstreifen eingesetzt werden.

Hierbei soll während der Vulkanisation eine feste und unlösbare Verbindung zwischen dem Reifengrundkörper und dem bereits vulkanisierten und profilierten Protektor 2 und eine einwandfreie Erneuerung der Reifenseitenwände erfolgen.

Um den Reifen für die Vulkanisation zu evakuieren, wird dieser in eine Kombination aus Innenhülle 5 und Außenhülle 4 eingehüllt. Die Hüllen sind aus einer entsprechend hitzebeständigen, flexiblen und luftundurchlässigen Gummimischung hergestellt. Die Innenhülle 5 umschließt im wesentlichen die Innenseite des Reifengrundkörpers 1 sowie die Seitenwände und ist außenseitig mit je einer umlaufenden Schließkante 7 versehen, die von der Außenhülle 4, die den Protektor 2 umschließt, überdeckt wird.

Beim Evakuieren über ein nicht dargestelltes Absaugventil dichten die Schließkanten 7 das System aus Innenhülle 5 und Außenhülle 4 ab.

Während der Vulkanisation gerät das unvulkanisierte Material der Schicht 3 in eine "Fließphase", wobei dieses, bedingt durch den Kesseldruck von 5 bis 8 bar, bei den bekannten Systemen aus Innen- und Außenhüllen das Bestreben hat, sich zwischen die Schließkanten und die Außenhülle zu verschieben.

Gemäß der gegenständlichen Erfindung wird nun, um ein Öffnen der Dichtverbindung zwischen jeder Schließkante 7 und der Außenhülle 4 zu vermeiden, die Innenhülle 5 über die Schließkante 7 hinaus verlängert, wobei der verlängerte Bereich in den Zeichnungsfiguren mit 6 bezeichnet ist. Die Innenhülle 5 wird soweit verlängert, daß sie zumindest bis an den vulkanisierten Protektor 1 reicht, bzw. den Protektor 1 seitlich zumindest zum Teil, insbesondere bis etwa zur Hälfte, abdeckt. Eine Trennung zwischen den Dichtkanten 7 der Innenhülle 5 und der Außenhülle 4 durch die Schicht 3 ist somit nicht mehr möglich.

Die verlängerten Bereiche 6 bestehen dabei vorzugsweise aus einer mit der Gummimischung der Innenhülle 5 übereinstimmenden Mischung.

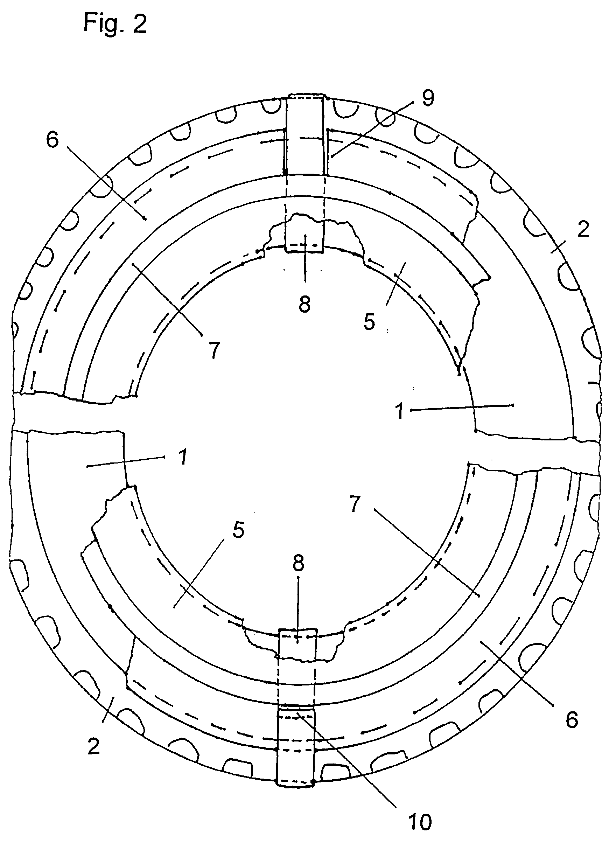

In Fig. 2 ist in Seitenansicht und zum Teil ausgeschnitten die Innenhülle 5 mit der Schließkante 7 und den verlängerten Bereichen 6 dargestellt.

Um ein vorzeitiges Abdichten der Innenhüllenverlängerungen 6 mit der Außenhülle 4 zu verhindern, wird ein im Bereich des Absaugventiles anzubringender Entlüftungsgewebestreifen 8 verwendet. Dieser kann, wie bekannt, aus einem textilen und mehrlagigen Gewebe bestehen und kann nun vor dem Einbringen des Reifens in die Hüllen 4, 5 in radialer Richtung um beide Wulstbereiche verlaufend angebracht werden. Dabei kann der Streifen 8, wie der obere Teil der Fig. 2 zeigt, in einer von der Schließkante 7 bis zum Ende jedes verlängerten Bereiches 6 reichenden Aussparung 9 der Innenhülle 5 oder, wie der untere Teil der Fig. 2 zeigt, durch eine knapp außerhalb der Schließkante 7 im verlängerten Bereich 6 ausgebildete Öffnung 10 plaziert werden. Diese Ausgestaltung kann an einer oder an beiden verlängerten Bereichen 6 getroffen werden.

Die Aussparung 9 und die Öffnung 10 sind in ihrer Breite der Breite des Entlüftunggewebestreifens 8 angepaßt.

Bei einer Ausführung mit Aussparung 9 wird der Streifen 8 straff in radialer Anordnung unter der Innenhülle 5 von Wulst zu Wulst bis über beide Wulstzehen hinaus plaziert.

Bei einer Ausführung mit Öffnung 10 wird der Streifen 8 außerhalb der Schließkante 7 jeweils über den verlängerten Bereich 6 und innerhalb der Schließkanten 7 unter der Innenhülle 5 ebenfalls straff in radialer Anordnung und ebenfalls bis über beide Wulstzehen plaziert.

Durch die Aussparung 9 oder die Öffnung 10 ist es über den Entlüftunggewebestreifen 8 in jedem Fall möglich, ein vollständiges Vakuum bei der Evakuierung herzustellen.

## Patentansprüche

1. Vorrichtung für die Kaltvulkanisation von runderneuerten Reifen, bestehend aus einer den Reifen aufnehmenden Kombination aus Innen- und Außenhülle zum Erzeugen von Vakuum zwischen Reifen und Hüllen, wobei die Außenhülle im Bereich von Schließkanten die Innenhülle überdeckt, dadurch gekennzeichnet, daß die Innenhülle (5) zumindest einseitig über die Schließkante (7) hinaus, insbesondere bis zum Protektor (2) des Reifens reichend, verlängert ist.

2. Vorrichtung nach Anspruch 1, dadurch gekennzeichnet, daß die Innenhülle (5) soweit verlängert ist, daß sie den Protektor (2) zumindest zum Teil seitlich überdeckt.

3. Vorrichtung nach Anspruch 1 oder 2, dadurch gekennzeichnet, daß eine im Bereich des Absaugventiles angeordnete Entlüftungshilfe vorgesehen ist.

4. Vorrichtung nach Anspruch 3, dadurch gekennzeichnet, daß als Entlüftungshilfe ein Entlüftungsgewebestreifen (8) od. dgl. verwendet wird.

5. Vorrichtung nach einem der Ansprüche 1 bis 4, dadurch gekennzeichnet, daß die Innenhülle (5) zur Aufnahme des Entlüftungsgewebestreifens (8) zumindest einseitig außerhalb der Schließkante (7) mit einer Öffnung (10), einer Aussparung (9) od. dgl. versehen ist.

6. Vorrichtung nach einem der Ansprüche 1 bis 5, dadurch gekennzeichnet, daß der Gewebestreifen (8) in radialer Anordnung zur Laufrichtung des Reifens über die Wulstbereiche verlaufend angebracht ist.

7. Vorrichtung nach einem der Ansprüche 1 bis 6, dadurch gekennzeichnet, daß die Schließkante (7) an der Innenhülle (5) etwa im Bereich der Flankenmitte derselben angebracht ist.
